# EUROPÄISCHE PATENTANMELDUNG

(11) **EP 1 406 459 A1**
(43) Veröffentlichungstag der Anmeldung: **07.04.2004**
(21) Anmeldenummer: 02022265.9
(22) Anmeldetag: 04.10.2002
(51) Int. Cl.: H04Q 7/32, H04L 29/06

(54) **Verfahren zur mehrfaktorfähigen Authentifizierung durch Passwortübermittlung über mobile Endgeräte mit optionaler Pin**

(71) Anmelder: Kessler, Stephan, 81827 München (DE); Gähwiler, Basil Frank, 64297 Darmstadt (DE)
(72) Erfinder: Kessler, Stephan, 81827 München (DE); Gähwiler, Basil Frank, 64297 Darmstadt (DE)

(57) **Zusammenfassung**

Die vorliegende Erfindung betrifft ein Verfahren und ein System zur Authentifizierung für den Zugriff auf eine Netzwerkinfrastruktur, eine Webanwendung, eine kommerzielle Transaktion oder ein physisches Zugangskontrollsystem (z.B. Gebäudezugang) mittels elektronischer Passwortübermittlung beispielsweise via SMS oder E-Mail an mobile Endgeräte (z.B. Mobiltelefone) mit optionaler PIN.

Der Benutzer erhält zunächst ein initiales Passwort zur erstmaligen Anmeldung auf seinem Zielsystem. Nach der ersten und jeder weiteren Kontaktaufnahme mit seinem Zielsystem wird per elektronischer Datenübermittlung (beispielesweise via Mobiltelefon und SMS) ein zufällig generiertes neues Passwort an ihn übermittelt. Bei seiner nächsten Anmeldung verwendet er dieses neue Passwort und nach dieser Anmeldung wird wiederum ein neues zufällig generiertes Passwort an ihn versendet und so fort. Die zusätzliche Verwendung von Pin-Nummern als Ergänzung zu den zufällig generierten Passwörtern ist dabei zur Erhöhung der Sicherheit optional.

## Beschreibung

Die vorliegende Erfindung betrifft ein Verfahren und ein System zur Authentifizierung für den Zugriff auf eine Netzwerkinfrastruktur, eine Webanwendung, eine kommerzielle Transaktion oder ein physisches Zugangskontrollsystem (z.B. Gebäudezugang) mittels elektronischer Passwortübermittlung beispielsweise via SMS oder E-Mail an mobile Endgeräte (z.B. Mobiltelefone) mit optionaler PIN.

Aufgrund des umfassenden Einsatzes von elektronischen Datenverarbeitungsanlagen in kritischen Geschäftsbereichen, gewinnen Systeme zur Identifikation und Authentifizierung immer mehr an Bedeutung.

Nahezu alle Systeme und Infrastrukturen wie Netzwerkinfrastrukturen, Webanwendungen und physikalische Zugangskontrollsysteme führen eine Identifikation und Authentifizierung durch. Eine Identifizierung eines Benutzers zielt darauf ab, die Identität des betreffenden Benutzers festzustellen. Unter Authentifizierung ist im allgemeinen ein der Indentifizierung übergeordneter Kontrollzugang zu verstehen, durch den überprüft wird, ob der Benutzer auch tatsächlich derjenige ist, der er vorgibt zu sein.

Bisher ist der gebräuchlichste Authentifizierungsmechanismus das konventionelle Passwort. Das konventionelle Passwort bietet wenig Sicherheit, da es aufgeschrieben, weitergegeben und vergessen werden kann. Oft sind Passwörter auch assoziierbar mit dem Benutzer, z.B. dem Name eines Familienmitgliedes, Geburtsdatum u.s.w.

Es werden daher Mechanismen der sogenannten starken oder mehrfaktor Authentifizierung verwendet. Diese nutzen die Kombination von verschiedenen Faktoren und einem Einmalpasswort. Folgend werden mehrere bestehende Systeme beschrieben.

### Besitzfaktoren:

### Magnet- und Chip-Karten, Chip-Token (USB-Token)

Diese Authentifizierungsmethoden basieren auf dem sogenannten Mehrfaktor-Mechanismus. Man braucht üblicherweise eine PIN, meist vierstellig, und das Medium. Die PIN stellt einen Wissensfaktor dar und das Medium einen Besitzfaktor. Die Person muss im Besitz beider Faktoren sein um sich erfolgreich zu authentifizieren.

### Biometrische Faktoren:

Biometrische Authentifizierungsmethoden wie Fingerabdruckscanning, Unterschrifts-, Gesichts-, Retina und Spracherkennung, stellen ein Seinfaktor dar. Fingerabdruckscanning Systeme werden z.B. oft für die physikalische Zutrittskontrolle verwendet. Es gibt in der neueren Zeit Systeme in denen die Chip-Karte z.B. mit einem Fingerabdruck freigeschaltet wird.

Die Prinzipien der oben genannten Systeme zur starken Authentifizierung weisen jedoch eine Reihe von Nachteilen auf.

### zu Besitzfaktoren:

Alle bisherigen Systeme die einen Besitzfaktor beinhalten, müssen den Besitzfaktor unter den Benutzern verteilen. Dies ist mitunter sehr aufwendig. Viele der Besitzfaktoren, wie z.B. Chip-Karte, benötigen eine Infrastruktur, z.B. Kartenleser, welche beim Benutzer installiert und gewartet werden muss. Oft ist es sehr schwer oder auch nicht möglich diese zu implementieren. Der Vorgang der Installation und Wartung ist sehr kostenintensiv.

Solche Systeme bringen oft ein sehr aufwendiges Management mit sich, besonders bei Verlust des Besitzfaktors und des Wissensfaktors. Es muss in einem aufwendigen Vorgang dafür gesorgt werden, dass der Benutzer wieder ein Besitzfaktor, z.B. Chip-Karte, erhält, bzw. dass sein Wissensfaktor auf einen neuen Initialwert zurückgesetzt wird.

Die bisherigen Besitzfaktoren stellen meist ein zusätzliches Gerät dar. Der Betreiber muss dafür sorgen, dass der Benutzer im täglichen Gebrauch für alle diese Geräte Sorge trägt.

### zu biometrischen Faktoren:

Es ist nicht erwiesen das die biometrischen Systeme, Stand heute, sicher sind. Viele der biometrischen Mittel haben technische Unzulänglichkeiten. (Siehe Zeitschrift c't 12/2002, Seite 38: Biometrie; Heise Zeitschriften Verlag, http://www.heise.de/ct/02/12/038/default.shtml) Auch ist das registrieren des Benutzers sehr aufwendig. Ein zentrales Problem der Biometrie stellt die Datensicherheit der biometrischen Merkmale dar. Besonders die Frage: Wie ist sichergestellt, dass die biometrischen Daten nicht missbraucht werden und z.B. für andere Systeme genutzt werden. Hierzu kommt die Besonderheit des Seinfaktors hinzu. Es ist dem Benutzer z.B. nicht möglich, seinen Fingerabdruck zu ändern wenn dieser in falsche Hände gerät.

Wichtig ist die Betrachtung der Infrastruktur, die erstellt werden muss, um die Resource, auch Backend genannt, zu schützen. Nahezu alle oben beschriebenen starken Authentifizierungssysteme, nehmen einen tiefen Eingriff in diese Resource vor. Viele der Systeme stellen eine eigene Authentifizierungsinstanz zur Verfügung, welche von den bestehenden Systemen angesprochen werden muss. Damit die bestehenden Systeme diesen Vogang erfüllen, muss in diese eingegriffen werden.(Siehe z.B. Lösung RSA SecurID der RSA Security)

In der vorliegende Erfindung sind Verfahren und ein System zur mehrfaktor Authentifizierung eines Benutzers durch elektronischer Passwortübermittlung mit optionaler PIN ohne zusätzliches Authentisierungsgerät und ohne zusätzliche Authentisierungsinstanz offenbart.

Der grundsätzliche Vorteil der vorliegenden Erfindung liegt in der Verwendung bestehender Infrastrukturen in allen Bereichen einer starken Authentisierungslösung.

Auf der Benutzerseite wird beispielsweise das heute weit verbreitete GSM-Netz und die bestehenden Mobiltelefone, auch Handys genannt, genutzt. Die vorliegende Erfindung nutzt in der beschriebenen Variante die Anwendung SMS (Short Message Service), eine der meist genutzten Anwendungen auf dem Mobiltelefon. Da das Mobiltelefon respektive das eingesetzte SIM ( Subscriber Identification Module) durch eine PIN geschützt wird, stellt dieses Gerät ein Zweifaktor Gerät dar.

Auf der Backendseite nutzt die vorliegende Erfindung die Funktionalität des Passwortreset der zu schützenden bestehenden Systeme, welche von nahezu allen Systemen angeboten wird. Es wird schlussendlich ein automatisierter Passwortreset vollzogen. Daraus folgt kein Eingriff in die bestehenden Systeme.
Für die Anwenderverwaltung setzt das System auf die weit verbreiteten Directories die meist den Standard X500 unterstützen. Die vorliegende Erfindung nutzt die integrierten Benutzerverwaltungen der bestehenden Systeme. Es wird lediglich eine eigene Benutzerführung für die Konfiguration des Systems benötigt. Die Veränderungen an den Directories werden über das Protokoll LDAP vorgenommen, welches ein Standard für Directories darstellt.

Das Registrieren der Benutzer gestaltet sich besonders einfach. Die Identität der Benutzer wird bei der vorliegenden Erfindung durch die Nummer des mobilen Endgerätes oder die E-Mailadresse des Benutzers repräsentiert. Das heisst, es muss lediglich dieses eindeutige Merkmal des Benutzers in den Directories eingepflegt werden. Die Mobilnummer oder E-Mailadresse ist z.B. im Standardset des Schemas der X500 Directories vorgesehen. Alle wesentlichen Directories unterstützen den Standard X500.

Die vorliegende Erfindung beschreibt ein Verfahren mit sechs verschiedenen Varianten, die entsprechend sechs Patentansprüche darstellen.

Initial erhält der Benutzer ein Passwort beispielsweise mittels einer SMS, welche von einer autorisierten Person ausgelöst wird. Wenn das System im PIN Modus ausgeführt wird, muss der Benutzer inital eine PIN mit dem System aushandeln. Das heisst, dass der Benutzer eine PIN selber wählen kann, das System ihm eine vorgibt, oder dass er eine Initialisierungs PIN erhält, die er dann ändern muss.
Das Passwort ist eine Zufallszahl. Die Zufallswerte werden mittels den Standard Zufallsgeneratoren der Programiersprachen und wenn vorhanden dem Zufallsgenerator des Hardwaresystems generiert. Nachdem das neue Passwort generiert wurde wird auf dem Zielsystem (z.B. Netzwerk, Firewall, VPN, physisches Zugangskontroll-system) das Passwort für den Benutzer auf den Wert des neuen generierten Passwortes zurückgesetzt.

Die vorliegende Erfindung wird im folgendenden unter Zuhilfenahme der Zeichnungen beispielhaft näher erläutert. Hierbei zeigt
Fig.1
   eine schematische Übersicht aller Komponenten der vorliegenden Erfindung
Fig. 2, Fig 3, Fig 4
   eine in Form eines Ablaufplans schematisierte Darstellung der Abläufe bei den verschiedenen Ausführungsmodi der Authentifizierung im Rahmen der vorliegenden Erfindung.
Fig. 5
   eine in Form eines Ablaufplans schematisierte Darstellung der Fehlerbehandlung im Rahmen der vorliegenden Erfindung. Diese Fehlerbehandlung ist für alle Ausführungsmodi gültig.

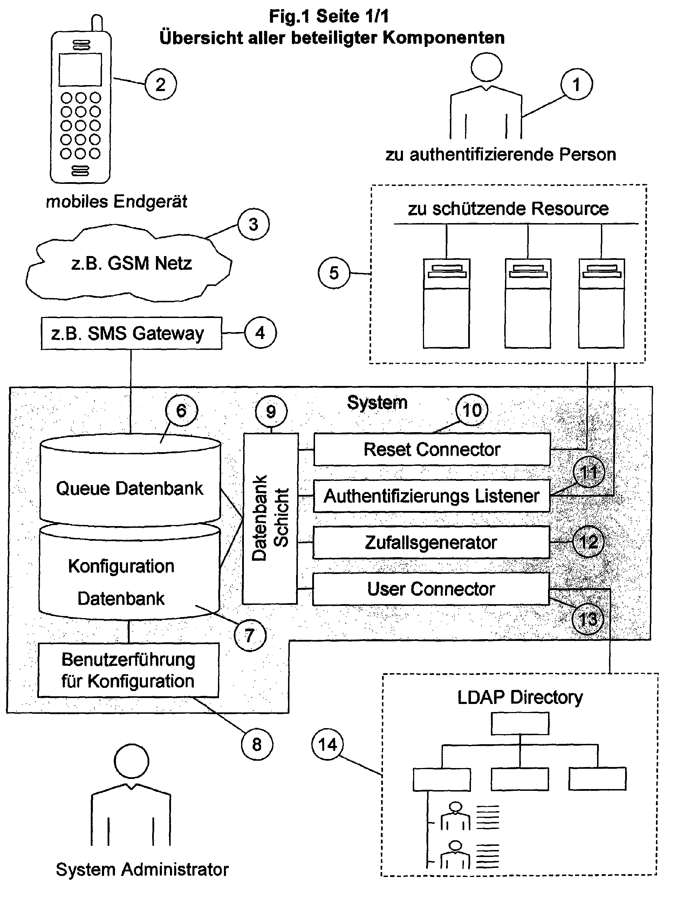

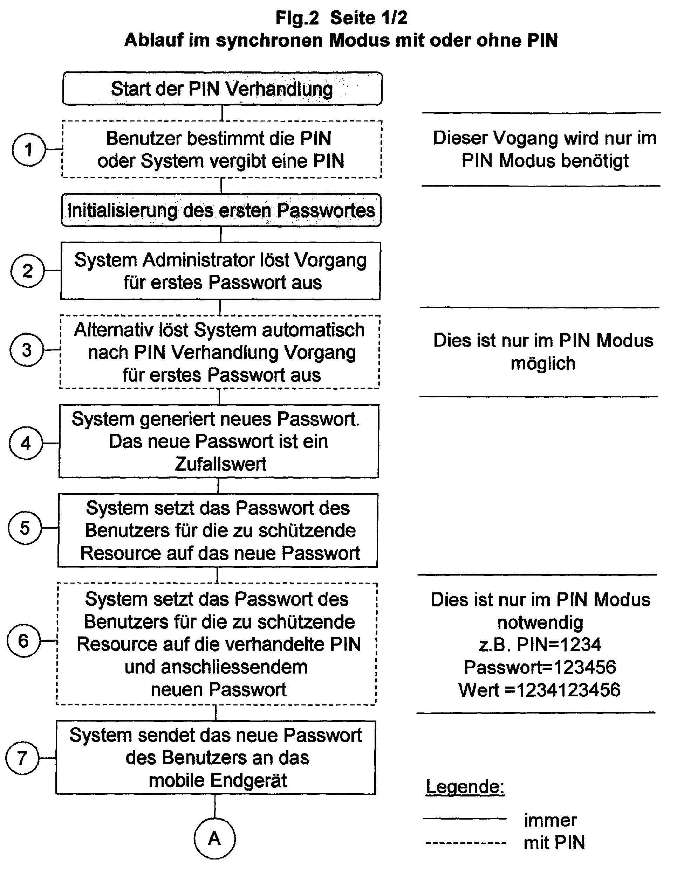

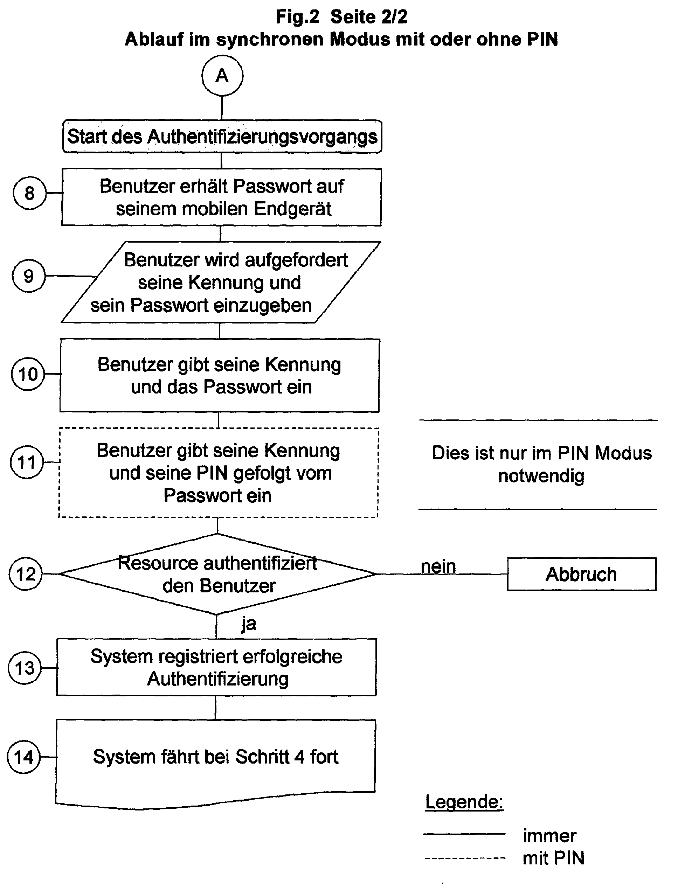

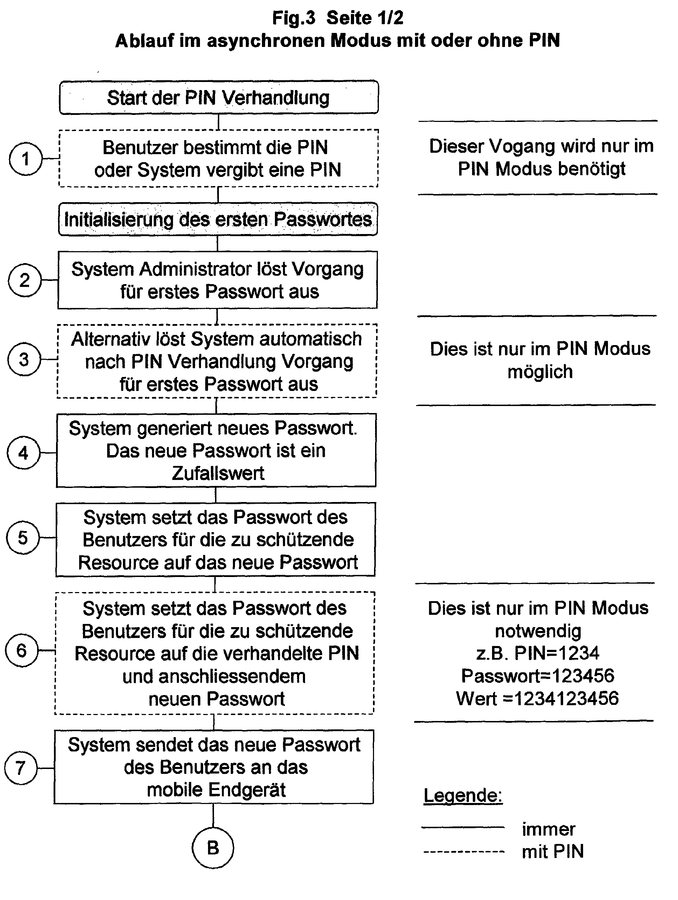

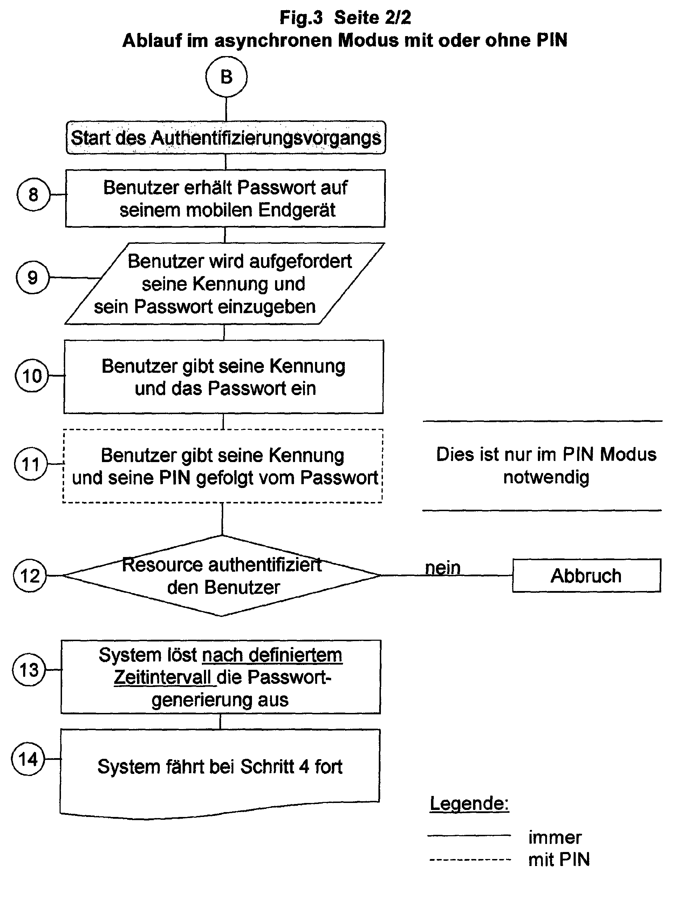

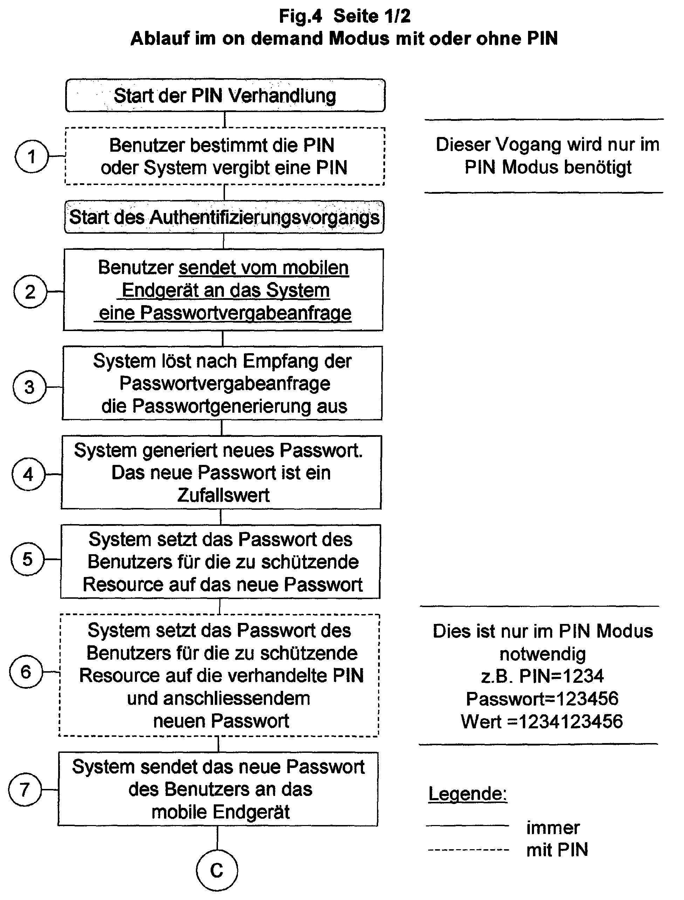

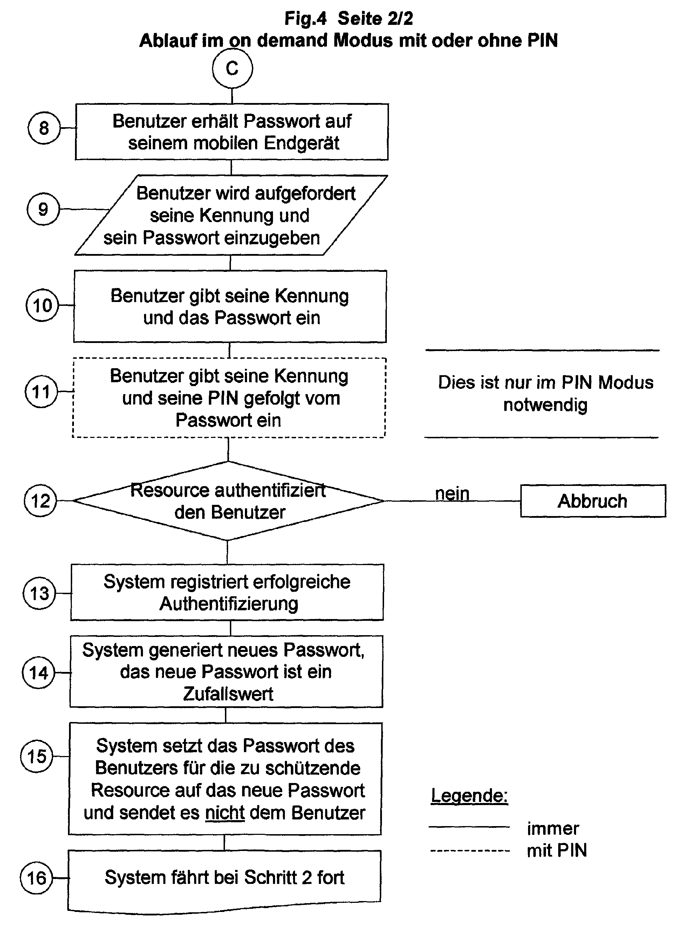

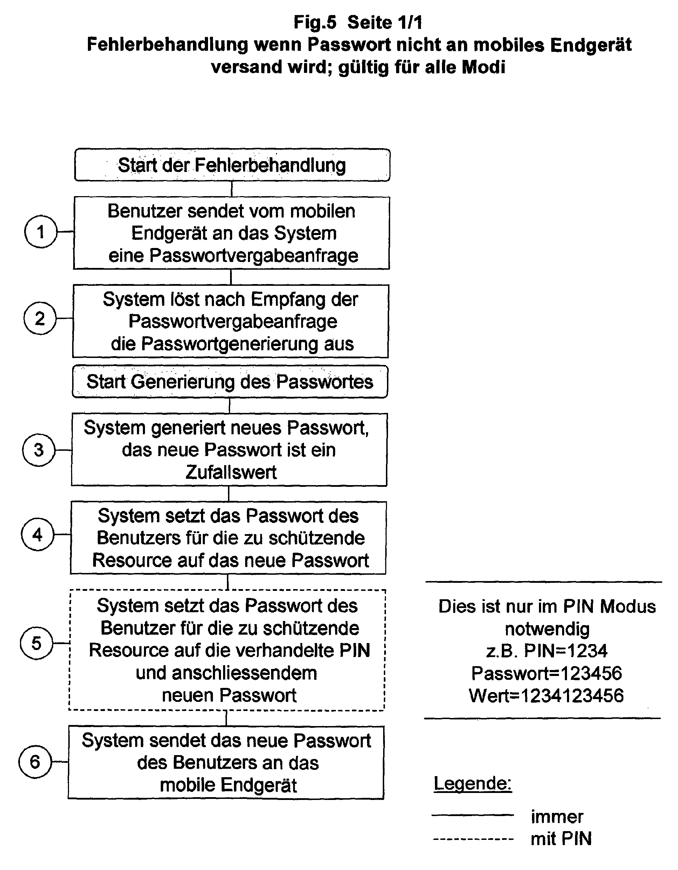

### Übersicht (Fig. 1):

In dieser schematischen Darstellung sind alle wesentlichen Komponenten des Systems und der am Verfahren beteiltigten Komponenten dargestellt.

| Nummer des Prozessschrittes im Ablaufplan von Fig.1: | |
|---|---|
| 1 | Der zu authentifierende Benutzer |
| 2 | Das mobile Endgerät welches eindeutig dem Benutzer zugewiesen ist. Unter mobiles Endgerät verstehen sich Geräte wie mobiles Telefon, PDA (Personal Data Administrator) mit intergriertem mobilen Telefon o.ä.. Diese mobilen Endgeräte haben immer eine eindeutige Adressierung, z.B. die Telefonnummer eines mobilen Telefons. |
| 3 | Medium über welches das mobile Endgerät angesprochen wird. Z.B. GSM Netz für mobile Telefone in Europa |
| 4 | Gateway oder ähnliches um dem mobilen Gerät eine Nachricht zu senden. Z.B. SMS Gateway zum versenden von SMS an mobile Telefone |
| 5 | Die zu schützende Resource, im Text auch Zielsystem genannt. Z.B. kann ein Computernetzwerk eine zu schützende Resource darstellen. |
| 6 | Queue Datenbank. Diese ist wie eine Warteschlange zu verstehen und dient zur Bewältigung von Spitzen. Authentisierungsanträge sowie auch erstellte Nachrichten gelangen zuerst in diese Datenbank und werden dann chronologisch abgearbeitet. Man nennt diese Verfahren auch "store and foreward" |
| 7 | In dieser Datenbank werden alle Konfigurationsparameter abgespeichert. Z.B Informationen, welcher der verschiedenen Ausführungsmodi verwendet werden sollte. |
| 8 | Benutzerführung um die Konfiguration einzustellen. |
| 9 | Datenbankschicht. Durch diese Schicht erlangt man eine Unabhängigkeit der verschiedenen Datenbanksysteme. |
| 10 | Reset Connector. Dieser ist zuständig um die Passwörter der Benutzer auf die neuen Werte zu setzen. Dieser Reset Connector ist immer spezifisch für das jeweilige Zielsystem. |
| 11 | Authentifizierungs Listener. Dieser ist zuständig um die erfolgreichen Authentifizierungen zu registrieren. Der Authentifizierungs Listener ist immer spezifisch für das jeweilige Zielsystem |
| 12 | Zufallsgenerator generiert die neuen Passwörter unter Zuhilfenahme von Hardware Zufallsgeneratoren, wenn vorhanden. |
| 13 | User Connector ist zuständig um die Bindung einer Adresse von einem mobilen Endgerät zu einer Person über ein Directory zu erfragen. |
| 14 | LDAP Directory: in diesem werden die Benutzer und die Bindung zwischen der Adresse des mobilen Endgerät und dem Benutzer gepflegt. |

## Patentansprüche

1. Ablauf im synchronen Modus ohne PIN (Fig.2)
| Nummer des Prozessschrittes im Ablaufplan von Fig.2: | |
|---|---|
| 1 | Prozessschritt 1 fällt beim Anspruch 2, synchroner Modus mit PIN an. |
| 2 | Der Systemadministrator, eine Person die die Authorisierung hat, einen solchen Vorgang auszulösen, löst den Vorgang für das erste Passwort aus. |
| 3 | Prozessschritt 3 fällt beim Anspruch 2, synchroner Modus mit PIN an. |
| 4 | Das System generiert ein neues Passwort. Das System nimmt hierzu den Zufallsgenerator zu Hilfe (Fig.1, Element 12). |
| 5 | Das System setzt das Passwort des Benutzers für das Zielsystem auf das neue Passwort. Das System nimmt hierzu den Reset Connector für das jeweilige Zielsystem zur Hilfe (Fig.1, Element 10) |
| 6 | Prozessschritt 6 fällt beim Anspruch 2, synchroner Modus mit PIN an. |
| 7 | System sendet das neue Passwort des Benutzers an das mobile Endgerät. Z.B. als SMS für mobile Telefone. Im Falle einer SMS nutzt das System ein SMS Gateway (Fig.1, Element 4) |
| 8 | Der Benutzer erhält das Passwort auf seinem mobilen Endgerät (Fig.1, Element 2). |
| 9 | Der Benutzer wird aufgefordert seine Kennung und sein Passwort einzugeben. Diese Aufforderung wird von der zu schützenden Resource kontrolliert (Fig.1, Element 5). |
| 10 | Benutzer gibt seine Kennung und das Passwort ein. |
| 11 | Prozessschritt 11 fällt beim Anspruch 2, synchroner Modus mit PIN an. |
| 12 | Die zu schützende Resource authentifiziert den Benutzer (Fig.1, Element 5). |
| 13 | Eine erfolgreiche Authentifizierung registriert das System mittels dem Authentifizierungs Listener (Fig.1, Element 11) und löst den Vorgang für ein neues Passwort aus. |
| 14 | Das System fährt bei Schritt 4 fort. |

2. Ablauf im synchronen Modus mit PIN (Fig.2)
Verfahren nach Anspruch 1, mit folgenden zusätzlichen Prozessschritten (siehe Verweise in Anspruch 1)
| Nummer des Prozessschrittes im Ablaufplan von Fig.2: | |
|---|---|
| 1 | Der Benutzer verhandelt eine PIN mit dem System. Das heisst, der Benutzer kann seine PIN selbst bestimmen oder eine PIN vom System vorgeben lassen. Die PIN wird im Directory (Fig.1, Element 14) gespeichert. |
| 3 | Alternativ löst das System den Vorgang für das erste Passwort automatisch nach der PIN Verhandlung aus. Diese Alternative ist nur im Modus mit PIN möglich. |
| 6 | Im PIN Modus setzt das System das Passwort des Benutzers für das Zielsystem auf den PIN und anschliessendem neuen Passwort. Das System nimmt hierzu den Reset Connector für das jeweilige Zielsystem zur Hilfe (Fig.1, Element 10). Beispiel. PIN=1234, Passwort=123456, Wert für das Zielsystem = 1234123456. Die PIN wird aus dem Directory mittels dem User Connector (Fig.1, Element 13) ausgelesen. |
| 11 | Benutzer gibt seine PIN gefolgt vom Passwort ein. Dies ist nur im PIN Modus erforderlich. |

3. Ablauf im asynchronen Modus ohne PIN (Fig. 3)
| Nummer des Prozessschrittes im Ablaufplan von Fig.3: | |
|---|---|
| 1 | Prozessschritt 1 fällt beim Anspruch 4, asynchroner Modus mit PIN an. |
| 2 | Der Systemadministrator, eine Person die die Authorisierung hat, einen solchen Vorgang auszulösen, löst den Vorgang für das erste Passwort aus. |
| 3 | Prozessschritt 3 fällt beim Anspruch 4, asynchroner Modus mit PIN an. |
| 4 | Das System generiert ein neues Passwort. Das System nimmt hierzu den Zufallsgenerator zu Hilfe (Fig.1, Element 12). |
| 5 | Das System setzt das Passwort des Benutzer für das Zielsystem auf das neue Passwort. Das System nimmt hierzu den Reset Connector für das jeweilige Zielsystem zur Hilfe (Fig.1, Element 10) |
| 6 | Prozessschritt 6 fällt beim Anspruch 4, asynchroner Modus mit PIN an. |
| 7 | System sendet das neue Passwort des Benutzers an das mobile Endgerät. Z.B. als SMS für mobile Telefone. Im Falle einer SMS nutzt das System ein SMS Gateway (Fig.1, Element 4) |
| 8 | Der Benutzer erhält das Passwort auf seinem mobilen Endgerät (Fig.1, Element 2). |
| 9 | Der Benutzer wird aufgefordert seine Kennung und sein Passwort einzugeben. Diese Aufforderung wird von der zu schützenden Resource kontrolliert (Fig.1, Element 5). |
| 10 | Benutzer gibt seine Kennung und das Passwort ein. |
| 11 | Prozessschritt 11 fällt beim Anspruch 4, asynchroner Modus mit PIN an. |
| 12 | Die zu schützende Resource authentifiziert den Benutzer (Fig.1, Element 5). |
| 13 | Das System löst nach einem definiertem Zeitintervall die Passwortgenerierung aus. |
| 14 | Das System fährt bei Schritt 4 fort. |

4. Ablauf im asynchronen Modus mit PIN (Fig.3)
Verfahren nach Anspruch 3, mit folgenden zusätzlichen Prozessschritten (siehe Verweise in Anspruch 3)
| Nummer des Prozessschrittes im Ablaufplan von Fig.3: | |
|---|---|
| 1 | Der Benutzer verhandelt eine PIN mit dem System. Das heisst, der Benutzer kann seine PIN selbst bestimmen oder eine PIN vom System vorgeben lassen. Die PIN wird im Directory (Fig.1, Element 14) gespeichert. |
| 3 | Alternativ löst das System den Vorgang für das erste Passwort automatisch nach der PIN Verhandlung aus. Diese Alternative ist nur im Modus mit PIN möglich. |
| 6 | Im PIN Modus setzt das System das Passwort des Benutzers für das Zielsystem auf den PIN und anschliessendem neuen Passwort. Das System nimmt hierzu den Reset Connector für das jeweilige Zielsystem zur Hilfe (Fig.1, Element 10). Beispiel. PIN=1234, Passwort=123456, Wert für das Zielsystem = 1234123456. Die PIN wird aus dem Directory mittels dem User Connector (Fig.1, Element 13) ausgelesen. |
| 11 | Benutzer gibt seine PIN gefolgt vom Passwort ein. Dies ist nur im PIN Modus erforderlich. |

5. Ablauf im on demand Modus ohne PIN (Fig.4)
| Nummer des Prozessschrittes im Ablaufplan von Fig.4: | |
|---|---|
| 1 | Prozessschritt 1 fällt beim Anspruch 6, on demand Modus mit PIN an. |
| 2 | Der Benutzer sendet vom mobilen Endgerät an das System eine Passwortvergabeanfrage. Über eine vorher festglegte Adressierung via einer definierten Nummer oder einem Keyword erkennt das System, für welches Zielsystem ein neues Passwort vergeben werden soll. |
| 3 | Das System löst nach Empfang der Passwortvergabeanfrage die Passwortgenerierung aus. Die Passwortvergabeanfragen werden in der Queue Datenbank (Fig.1, Element 6) zwischengespeichert um Höchstlasten sauber abzuarbeiten. |
| 4 | Das System generiert ein neues Passwort. Das System nimmt hierzu den Zufallsgenerator zu Hilfe (Fig.1, Element 12). |
| 5 | Das System setzt das Passwort des Benutzers für das Zielsystem auf das neue Passwort. Das System nimmt hierzu den Reset Connector für das jeweilige Zielsystem zur Hilfe (Fig.1, Element 10) |
| 6 | Prozessschritt 6 fällt beim Anspruch 6, on demand Modus mit PIN an. |
| 7 | System sendet das neue Passwort des Benutzers an das mobile Endgerät. Z.B. als SMS für mobile Telefone. Im Falle einer SMS nutzt das System ein SMS Gateway (Fig.1, Element 4) |
| 8 | Der Benutzer erhält das Passwort auf seinem mobilen Endgerät (Fig.1, Element 2). |
| 9 | Der Benutzer wird aufgefordert seine Kennung und sein Passwort einzugeben. Diese Aufforderung wird von der zu schützenden Resource kontrolliert (Fig.1, Element 5). |
| 10 | Benutzer gibt seine Kennung und das Passwort ein. |
| 11 | Prozessschritt 11 fällt beim Anspruch 6, on demand Modus mit PIN an. |
| 12 | Die zu schützende Resource authentifiziert den Benutzer (Fig.1, Element 5). |
| 13 | Eine erfolgreiche Authentifizierung registriert das System mittels dem Authentifizierungs Listener (Fig.1, Element 11) und löst den Vorgang für ein neues Passwort aus. |
| 14 | Das System setzt das Passwort des Benutzers für das Zielsystem auf das neue Passwort. Das System nimmt hierzu den Reset Connector für das jeweilige Zielsystem zur Hilfe (Fig.1, Element 10). Das System sendet das neue Passwort nicht dem Benutzer. |
| 15 | Das System fährt bei Schritt 2 fort. |

6. Ablauf im on demand Modus mit PIN (Fig.4)
Verfahren nach Anspruch 5, mit folgenden zusätzlichen Prozessschritten (siehe Verweise in Anspruch 5)
| Nummer des Prozessschrittes im Ablaufplan von Fig.4: | |
|---|---|
| 1 | Der Benutzer verhandelt eine PIN mit dem System. Das heisst, der Benutzer kann seine PIN selbst bestimmen oder eine PIN vom System vorgeben lassen. Die PIN wird im Directory (Fig.1, Element 14) gespeichert. |
| 6 | Im PIN Modus setzt das System das Passwort des Benutzers für das Zielsystem auf den PIN und anschliessendem neuen Passwort. Das System nimmt hierzu den Reset Connector für das jeweilige Zielsystem zur Hilfe (Fig.1, Element 10). Beispiel. PIN=1234, Passwort=123456, Wert für das Zielsystem = 1234123456. Die PIN wird aus dem Directory mittels dem User Connector (Fig.1, Element 13) ausgelesen. |
| 11 | Benutzer gibt seine PIN gefolgt vom Passwort ein. Dies ist nur im PIN Modus erforderlich. |

7. Fehlerbehandlung ohne PIN, wenn Passwort nicht an mobiles Endgerät versendet wird; gültig für alle Modi (Fig.5)
| Nummer des Prozessschrittes im Ablaufplan von Fig.5: | |
|---|---|
| 1 | Der Benutzer sendet vom mobilen Endgerät an das System eine Passwortvergabeanfrage. Über eine vorher festglegte Adressierung via einer definierten Nummer oder einem Keyword erkennt das System, für welches Zielsystem ein neues Passwort vergeben werden soll. |
| 2 | Das System löst nach Empfang der Passwortvergabeanfrage die Passwortgenerierung aus. Die Passwortvergabeanfragen werden in der Queue Datenbank (Fig.1, Element 6) zwischengespeichert um Höchstlasten sauber abzuarbeiten. |
| 3 | Das System generiert ein neues Passwort. Das System nimmt hierzu den Zufallsgenerator zu Hilfe (Fig.1, Element 12). |
| 4 | Das System setzt das Passwort des Benutzers für das Zielsystem auf das neue Passwort. Das System nimmt hierzu den Reset Connector für das jeweilige Zielsystem zur Hilfe (Fig.1, Element 10) |
| 5 | Prozessschritt 5 fällt beim Anspruch 8, Fehlerbehandlung mit PIN an. |
| 6 | System sendet das neue Passwort des Benutzers an das mobile Endgerät. Z.B. als SMS für mobile Telefone. Im Falle einer SMS nutzt das System ein SMS Gateway (Fig.1, Element 4) |

8. Fehlerbehandlung mit PIN, wenn Passwort nicht an mobiles Endgerät versendet wird; gültig für alle Modi (Fig. 5)
Verfahren nach Anspruch 7, mit folgendem zusätzlichen Prozessschritt (siehe Verweis in Anspruch 7)
| Nummer des Prozessschrittes im Ablaufplan von Fig.5: | |
|---|---|
| 5 | Im PIN Modus setzt das System das Passwort des Benutzers für das Zielsystem auf den PIN und anschliessendem neuen Passwort. Das System nimmt hierzu den Reset Connector für das jeweilige Zielsystem zur Hilfe (Fig.1, Element 10). Beispiel. PIN=1234, Passwort=123456, Wert für das Zielsystem = 1234123456. Die PIN wird aus dem Directory mittels dem User Connector (Fig.1, Element 13) ausgelesen. |
